# EUROPÄISCHE PATENTSCHRIFT

(11) **EP 2 994 554 B1**
(45) Veröffentlichungstag und Bekanntmachung des Hinweises auf die Patenterteilung: **18.07.2018**
(21) Anmeldenummer: 14715323.3
(22) Anmeldetag: 07.04.2014
(51) Int. Cl.: C23C 22/74, C23C 22/20, C23C 22/22, C21D 8/12, H01F 1/147

(54) **CHROMFREIE BESCHICHTUNG ZUR ELEKTRISCHEN ISOLIERUNG VON KORNORIENTIERTEM ELEKTROBAND**
CHROME-FREE COATING FOR THE ELECTRICAL INSULATION OF GRAIN-ORIENTED ELECTRICAL STEEL STRIP
REVÊTEMENT SANS CHROME POUR L'ISOLATION ÉLECTRIQUE DE TÔLES MAGNÉTIQUES À GRAINS ORIENTÉS

(30) Priorität: 10.05.2013 DE 102013208618
(43) Veröffentlichungstag der Anmeldung: 16.03.2016
(73) Patentinhaber: Henkel AG & Co. KGaA, 40589 Düsseldorf (DE)
(72) Erfinder: SUNDERMEIER, Uta, 42799 Leichlingen (DE); WARK, Reiner, 42103 Wuppertal (DE); HOCHSTRATE, Ramona, 47138 Duisburg (DE)
(86) Internationale Anmeldenummer: PCT/EP2014/056908
(87) Internationale Veröffentlichungsnummer: WO 2014/180610

(56) Entgegenhaltungen:
- EP-A1- 2 022 874
- EP-A1- 2 264 220
- JP-A- S54 143 737
- US-A- 4 120 702

## Beschreibung

Die vorliegende Erfindung betrifft eine wässrige Zusammensetzung auf Basis von Phosphaten, Aluminium- und anderen Metallionen, insbesondere Mangan- und Zink-Ionen, sowie Silikaten, Siloxanen oder Silanen, zur Bereitstellung von korrosionsschützenden Überzügen auf Metalloberflächen, insbesondere zur elektrischen Isolierung von kornorientiertem Elektroband. Für die gewünschte Funktionalität enthalten die erfindungsgemäßen Zusammensetzungen die genannten Bestandteile in einem vorgegeben Verhältnis zueinander. Weiterhin betrifft die Erfindung ein Verfahren zur Beschichtung der Oberfläche eines metallischen Werkstoffs unter Verwendung der wässrigen Zusammensetzungen, wobei das Verfahren insbesondere auf kornorientiertem Elektroband hervorragende Ergebnisse hinsichtlich Korrosionsschutz und Haftung liefert.

Elektroblech ist mit einer jährlichen weltweiten Erzeugung von rund 10 Mio. Tonnen der mengenmäßig und wertmäßig bedeutendste weichmagnetische Werkstoff. Es wird nach seinen Eigenschaften in nicht-kornorientierte und kornorientierte Werkstoffe unterteilt. Elektroblech und -band bezeichnet im engeren Sinn kaltgewalztes Band aus Eisen-Silizium-Legierungen, darüber hinaus auch die daraus geschnittenen oder gestanzten Blechlamellen, die zur Herstellung von magnetischen Kreisen für elektrische Maschinen, also von Eisenkernen für Dynamos, Elektromotoren, Transformatoren, Relais, Schaltschützen, Drosselspulen, Zündspulen, Stromzähler und steuerbaren Ablenkmagneten verwendet werden. Kornorientiertes Elektroband ist ein wichtiger Werkstoff bei der Herstellung energieeffizienter Transformatoren und großer Hochleistungsgeneratoren. Er wird überall dort eingesetzt, wo Bewegung in elektrische Energie und elektrische Energie in Bewegung umgewandelt sowie über lange Strecken transportiert wird. Als Kernwerkstoff ist kornorientiertes Elektroband in Verteil- und Leistungstransformatoren sowie Kleintransformatoren in geschichteter, gewickelter oder gestanzter Form zu finden.

Die Herstellung kornorientierten Elektrobands ist im Stand der Technik bekannt und wird beispielsweise in der europäischen Patentveröffentlichung EP 1 752 548 A1 beschrieben. Üblicherweise wird das schlussgeglühte Kaltband vor einer Lagerung und dem Transport zum Abnehmer typischerweise mit einem Korrosionsschutz versehen.

Im Stand der Technik sind eine Vielzahl von Vorbehandlungsmethoden bekannt, die geeignete Überzüge für den Transportschutz liefern.

Beschichtungszusammensetzungen zur elektrischen Isolierung von kornorientiertem Elektroband sind im Stand der Technik bekannt und enthalten üblicherweise Chrom. Beispielhafte Zusammensetzungen sind in der deutschen Patentveröffentlichung DE 2247269 beschrieben. Die konventionellen Beschichtungen sind kostengünstig herzustellen, zeigen günstige Eigenschaften in Bezug auf Korrosionsschutz, Glühbeständigkeit, Schrumpfspannung, elektrische Isolierung, Adhäsion, hygroskopische Widerstandsfähigkeit und Klebrigkeit. Allerdings sind die enthaltenen Chromverbindungen schädlich für die menschliche Gesundheit und die Umwelt.

Es ist daher wünschenswert, Chromverbindungen in solchen Zusammensetzungen zu ersetzen ohne die bekannten günstigen Eigenschaften zu beeinflussen. Obwohl andere Metallverbindungen für diesen Zweck vorgeschlagen wurden, u.a. Vanadiumverbindungen, organische Titankomplexe und Permanganate divalenter Metallionen, sind diese Verbindungen entweder ebenfalls toxisch, besitzen eine verringerte Stabilität oder sind nicht in größeren Mengen kostengünstig erhältlich. JP-A-54 143 737 und EP-A-2 022 874 offenbaren chromfreie Zusammensetzungen für die Herstellung von isolierenden Schichten auf Elektroband. Die Zusammensetzungen enthalten Phosphat-Ionen, Silika und Metallionen. Daher besteht weiterhin Bedarf an kostengünstig verfügbaren Beschichtungszusammensetzungen, die die bekannten Nachteile überwinden.

Die Erfinder der vorliegenden Erfindung haben nun überraschenderweise gefunden, dass sich wasserbasierte Zusammensetzungen die Phosphate, Silikate, Aluminiumionen, Zinkionen, Mangan- und/oder Eisenionen und bevorzugt auch Magnesium- und/oder Kalziumionen enthalten dazu eignen die bekannten chromhaltigen Zusammensetzungen zu ersetzen ohne die Leistung der Beschichtung negativ zu beeinflussen.

In einem ersten Aspekt betrifft die Erfindung daher eine wasserbasierte chromfreie Zusammensetzung enthaltend
a) Phosphorsäure und/oder deren Säureanionen;
b) solvatisierte Aluminium-Kationen,
c) solvatisierte Ionen enthaltend die Elemente Fe, Zn und/oder Mn,
d) mindestens ein Silikat und/oder mindestens ein wasserlösliches Silan oder Siloxan, wobei solvatisierte Ionen des Elements Zink als Komponente c) enthalten sind und mindestens ein weiteres solvatisiertes Ion der übrigen Elemente gemäß Komponente c), wobei das molare Verhältnis von Aluminium-Kationen gemäß Komponente b) zur Menge an Phosphorsäure und/oder deren Säureanionen jeweils berechnet als PO₄ gemäß Komponente a) nicht größer als 1,0, vorzugsweise nicht größer als 0,7, und nicht kleiner als 0,1 ist, wobei das molare Verhältnis der Gesamtmenge der solvatisierten Ionen gemäß Komponente c) berechnet als die Gesamtmenge der Elemente Fe, Zn und Mn zur Menge an Phosphorsäure und/oder deren Säureanionen gemäß Komponente a) berechnet als PO4 nicht größer als 1,0, vorzugsweise nicht größer als 0,7, und nicht kleiner als 0,1 ist, und
wobei das molare Verhältnis von Silikaten, Silanen oder Siloxanen berechnet als SiO₂ gemäß Komponente d) zur Menge an Phosphorsäure und/oder deren Säureanionen berechnet als PO₄ gemäß Komponente a) nicht größer als 3,0, vorzugsweise nicht größer als 2,0, besonders bevorzugt nicht größer als 1,0, und nicht kleiner als 0,2 ist.

In einem weiteren Aspekt betrifft die Erfindung ein Verfahren zur Beschichtung der Oberfläche eines metallischen Werkstoffs, dadurch gekennzeichnet, dass die Oberfläche des metallischen Werkstoffs mit einer Zusammensetzung wie hierin beschrieben in Kontakt gebracht wird sowie die derart erhaltenen metallischen Werkstoffe, insbesondere Bandstähle, noch bevorzugter kornorientiertes Elektroband.

Schließlich richtet sich ein weiterer Aspekt der Erfindung auf Bandstahl, der auf der metallischen Oberfläche eine anorganische Erstbeschichtung bestehend im Wesentlichen aus Magnesiumoxid und auf dieser Erstbeschichtung eine anorganische Zweitbeschichtung aufweist, wobei die anorganische Zweitbeschichtung im Wesentlichen aus Silikaten und einer Anionenmatrix von Phosphaten besteht, die gemäß einem hierin beschriebenen Verfahren aufgebracht wird. Der Bandstahl ist vorzugsweise kornorientiertes Elektroband.

Der Begriff "chromfrei", wie hierin im Zusammenhang mit den beschriebenen Zusammensetzungen verwendet, bedeutet, dass die Zusammensetzung weniger als 100 ppm, vorzugsweise weniger als 10 ppm, besonders bevorzugt weniger als 1 ppm jeweils bezogen auf die Gesamtzusammensetzung an Verbindungen des Elements Chrom jeweils berechnet als Cr₂O₃ enthält.

"Wasserbasiert", wie hierin im Zusammenhang mit den beschriebenen Zusammensetzungen verwendet, bedeutet, dass die Zusammensetzung flüssig ist und Wasser als Hauptlösungsmittel enthält. In verschiedenen Ausführungsformen besteht das Lösungsmittel der Zusammensetzungen zu mindestens 50 Vol.-% aus Wasser, vorzugsweise zu mindestens 70 Vol.-%, noch bevorzugter zu mindestens 90 Vol.-%.

"Wasserlöslich", wie hierin im Zusammenhang mit den in der Zusammensetzungen enthaltenen Verbindungen verwendet, bedeutet, dass derartige Verbindungen bei einer Temperatur von 20 °C eine Löslichkeit von zumindest 5·10⁻² mol in einem Kilogramm Wasser mit einer Leitfähigkeit von nicht mehr als 1 µScm⁻¹ aufweisen.

Bei der Phosphorsäure und ihren Säureanionen handelt es sich vorzugsweise um orthoPhosphorsäure (H₃PO₄) und die entsprechenden Dihydrogenphosphate (H₂PO₄⁻), Monohydrogenphosphate (HPO₄²⁻) und ortho-Phosphate (PO₄³⁻). Die Dihydrogenphosphate werden hierin auch als primäre Phosphate, die Hydrogenphosphate als sekundäre Phosphate und die ortho-Phosphate als tertiäre Phosphate bezeichnet.

Bevorzugte Quellen für die Phosphorsäure und ihren Säureanionen sind die entsprechenden Phosphatsalze mit Metallionen, insbesondere primäre und sekundäre Phosphate, besonders bevorzugt die primären Phosphate. Die Metallionen werden vorzugsweise ausgewählt aus Aluminium und Mangan, optional auch Calcium und Magnesium. Insbesondere Aluminium- und Manganphosphate, vorzugsweise deren primäre Phosphate, werden bevorzugt eingesetzt.

Dementsprechend können als Quelle für solvatisierte Ionen der Komponente b) die wasserlöslichen Mono- und Dihydrogenphosphate eingesetzt werden. In bevorzugten Ausführungsformen der Erfindung, stammen die Komponenten a) und b) zumindest teilweise aus solvatisiertem primärem Aluminiumphosphat (Al(H₂PO₄)₃). Ebenso können die Komponenten a) und c) zumindest teilweise aus solvatisiertem primären Manganphosphat (Mn(H₂PO₄)₂) stammen.

Quellen für die Komponenten b) und c), insbesondere die Komponente c), können alternativ auch wasserlösliche anorganische Verbindungen sein, die vorzugsweise solche Anionen enthalten, die ausgewählt sind aus Hydroxiden, Oxiden, Carbonaten, Molybdaten, Pyrophosphaten, Sulfaten und Nitraten sowie aus Oxoanionen der Elemente Fe und Mn wie Ferrate und Manganate. Insbesondere bevorzugt sind solche Quellen auf Basis wasserlöslicher anorganischer Verbindungen, die oxidierend wirken oder oxidierend wirkende Anionen enthalten. Derartige Anionen schließen ein, sind aber nicht beschränkt auf Ferrate, Molybdate, Manganate und Nitrate. Beispielhafte Quellen für die Komponente c) sind daher ZnO, Zn(NO₃)₂, MnCO₃ und KMnO₄. Solvatisierte Ionen des Elements Zink sind als Komponente c) enthalten sowie mindestens ein weiteres solvatisiertes Ion der übrigen Elemente gemäß Komponente c). Hierdurch wird insbesondere die Entstehung von Schwefelwasserstoff und eine damit verbundene Geruchsbelästigung bei In-Kontakt-Bringen der erfindungsgemäßen Zusammensetzung mit kornorientiertem Elektrostahl unterbunden. In der Zusammensetzung ist das molare Verhältnis von solvatisierten Aluminium-Kationen gemäß Komponente b) zu solvatisierten Ionen des Elements Zink gemäß Komponente c) vorzugsweise nicht kleiner als 3, jedoch vorzugsweise nicht größer als 20, besonders bevorzugt nicht größer als 12. Als weiteres solvatisiertes Ion der übrigen Elemente gemäß Komponente c) sind insbesondere solvatisierte Ionen des Elements Mangan bevorzugt zusätzlich enthalten, wobei das molare Verhältnis von solvatisierten Aluminium-Kationen gemäß Komponente b) zu solvatisierten Ionen des Elements Mangan gemäß Komponente c) vorzugsweise nicht kleiner als 3, jedoch nicht größer als 20, vorzugsweise nicht größer als 12 ist. Die gleichzeitige Anwesenheit von solvatisierten Ionen des Elements Mangan und des Elements Zink verbessert insbesondere die Alkalistabilität von mit derartigen bevorzugten erfindungsgemäßen Zusammensetzungen erzeugten Beschichtungen auf Stahl.

Weiterhin sind solche erfindungsgemäße Zusammensetzungen bevorzugt, die zusätzlich solvatisierte Kationen der Elemente Mg und/oder Ca als weitere Komponente e) enthalten, wobei das molare Verhältnis von solvatisierten Aluminium-Kationen gemäß Komponente b) zu solvatisierten Kationen der Elemente Mg und/oder Ca gemäß Komponente e) vorzugsweise nicht kleiner 0,3, besonders bevorzugt nicht kleiner als 0,6, jedoch vorzugsweise nicht größer als 6, besonders bevorzugt nicht größer als 3 ist. Hierdurch wird eine weitere deutliche Steigerung der Alkalistabilität von mit erfindungsgemäßen Zusammensetzungen erzeugten Beschichtungen auf Stahl herbeigeführt. In diesem Zusammenhang besonders bevorzugt ist die Anwesenheit solvatisierter Kationen des Elements Mg als Komponente e) erfindungsgemäßer Zusammensetzungen. Als Quelle für die solvatisierten Kationen gemäß Komponente e) dienen vorzugsweise wasserlösliche Mono- und Dihydrogenphosphate und/oder wasserlösliche Hydroxide.

In verschiedenen Ausführungsformen der Erfindung, sind in den Zusammensetzungen insgesamt weniger als 1 g/kg, vorzugsweise weniger als 100 ppm an wasserlöslichen Verbindungen des Elements Bor enthalten. In weiteren Ausführungsformen, sind in den Zusammensetzungen insgesamt weniger als 100 ppm, bevorzugt weniger als 10 ppm, insbesondere bevorzugt weniger als 1 ppm an wasserlöslichen Verbindungen der Elemente Zr, Ti und/oder Hf enthalten.

Als Quelle für die solvatisierten Kationen der Komponenten b) und c) werden vorzugsweise keine solchen Verbindungen verwendet, die Halogenid-Ionen freisetzen, vorzugsweise ist der Anteil an Halogenid-Ionen in der Zusammensetzung kleiner als 100 ppm, besonders bevorzugt kleiner als 10 ppm, insbesondere bevorzugt kleiner als 1 ppm.

Bei den Silanen oder Siloxanen, die in den hierin beschriebenen Zusammensetzungen eingesetzt werden können, handelt es sich insbesondere um Organosilane, die jeweils zumindest einen hydrolysierbaren Substituenten aufweisen, der bei Hydrolyse als Alkohol abgespalten wird. Obwohl erfindungsgemäß auch tetraalkoxylierte Silane eingesetzt werden können, ist es bevorzugt, dass die Silane/Siloxane am jeweiligen Silizium-Atom mindestens eine, vorzugsweise ein bis drei nicht hydrolysierbare Substituenten tragen, wobei die Gesamtzahl der Substituenten an den jeweiligen Siliziumatomen der Organosilane vier ist. Bevorzugte Organosilane im Sinne der vorliegenden Erfindung weisen somit zumindest eine kovalente Si-C Bindung auf, über die ein sogenannter "nicht hydrolysierbarer Substituent" an das Silizium-Atom gebunden wird. Geeignete Organosilane können eine oder mehrere, vorzugsweise primäre, Aminogruppe(n) aufweisen.

Die hydrolysierbaren Substituenten der Organosilane (A) spalten bei der Kondensation und/oder Hydrolyse Alkohole ab, die vorzugsweise einen Siedepunkt von 100 °C bei einem Atmosphärendruck von 1 bar aufweisen. In bevorzugten Ausführungsformen sind die hydrolysierbaren Substituenten der Organosilane der erfindungsgemäßen Zusammensetzungen daher ausgewählt aus Methoxy-, Ethoxy-. und/oder Propoxygruppen, insbesondere aus Methoxygruppen.

Besonders geeignete Vertreter der Organosilane (A) in erfindungsgemäßen Zusammensetzungen sind ausgewählt aus Aminosilanen mit der allgemeinen Strukturformel (I):

H₂N-[(CH₂)ₘNH]_{y}(CH₂)ₙ-Si-X₃ (I)

wobei die Substituenten X jeweils unabhängig voneinander ausgewählt sind aus Alkoxy-Gruppen mit nicht mehr als vier, vorzugsweise nicht mehr als zwei Kohlenstoffatomen, wobei m und n jeweils unabhängig voneinander ganze Zahlen im Bereich von 1-4 sind und y eine ganze Zahl im Bereich von 0-8, vorzugsweise im Bereich von 1-5 ist. Bevorzugte Vertreter der Organosilane (A) nach der allgemeinen Strukturformel (I) sind 3-(Diethylentriamino)propyltrimethoxysilan, 3-(Ethylendiamino)propyltrimethoxysilan, 3-Aminopropyltrimethoxysilan, 3-(Diethylentriamino)propyltriethoxysilan, 3-(Ethylendiamino)propyltriethoxysilan und 3-Aminopropyltriethoxysilan, besonders bevorzugt ist 3-(Diethylentriamino)propyltrimethoxysilan.

Weiterhin können geringe Mengen an vernetzenden mehrkernigen Organosilanen in den hierin beschriebenen Zusammensetzungen enthalten sein. Demnach können in einer bevorzugten Zusammensetzung zusätzlich zumindest zweikernige Organosilane enthalten sein, bei denen die Silyl-Einheiten jeweils zumindest zwei hydrolysierbare Substituenten aufweisen und über zumindest eine nicht hydrolysierbare Dialkylenamin-Einheit miteinander verbunden sind, besonders bevorzugt besteht die Dialkylenamin-Einheit dabei aus nicht mehr als 10 Kohlenstoffatomen. Bevorzugte Vetreter dieser mehrkernigen Organosilane sind Bis(3-triethoxysilylpropyl)amin, Bis(3-trimethoxysilylpropyl)amin.

Alternativ können auch Siloxane verwendet werden, in denen die Silyleinheiten über Sauerstoffatome miteinander verknüpft sind.

Die in erfindungsgemäßen Zusammensetzungen enthaltenen Silikate können Wassergläser sein, d.h. aus einer Schmelze erstarrte, glasartige, also amorphe, wasserlösliche Silikate oder ihre wässrigen Lösungen. In den hierin beschriebenen Zusammensetzungen sind Wassergläser bevorzugt, in denen das molare Verhältnis von SiO₂ zu M₂O zumindest 5:2 beträgt, aber vorzugsweise nicht größer als 5:1 ist, wobei M ausgewählt ist aus Alkalimetallen und/oder quarternären Ammoniumverbindungen, besonders bevorzugt aus Kalium und/oder Natrium.

Alternativ können andere Silikate verwendet werden, die dem Fachmann bekannt sind.

Die Silikate können in Form von wässrigen Lösungen oder auch Dispersionen eingesetzt werden.

In verschiedenen Ausführungsformen können auch wässrige Dispersionen von Silika (SiO₂) als Komponente d) eingesetzt werden.

Wird die Komponente d) als wässrige Dispersion eingesetzt, weisen die Partikel einen D90-Wert von nicht mehr als 500 nm, vorzugsweise von nicht mehr als 300 nm, besonders bevorzugt von nicht größer als 200 nm auf. Der D90 Wert gibt dabei an, dass 90 Vol.-% der dispergierten Silikatpartikel eine Partikelgröße unterhalb des angegebenen Wertes aufweisen. Der D90 Wert wird aus volumengewichteten kumulativen Partikelgrößenverteilungen ermittelt, wobei die Partikelgrößenverteilungskurve mit Hilfe dynamischer Lichtstreumethoden zu messen ist.

Der pH-Wert der Zusammensetzung liegt vorzugsweise nicht unterhalb von 0,5, besonders bevorzugt nicht unterhalb von 1, und bevorzugt nicht oberhalb von 3,0, besonders bevorzugt nicht oberhalb von 2,5, insbesondere bevorzugt nicht oberhalb von 2,0.

In verschiedenen Ausführungsformen der Erfindung beträgt der Anteil an Phosphorsäure und/oder deren Säureanionen an der Zusammensetzung jeweils berechnet als PO₄ zumindest 10 g/kg, vorzugsweise zumindest 20 g/kg, jedoch vorzugsweise nicht mehr als 500 g/kg, besonders bevorzugt nicht mehr als 200 g/kg.

Des Weiteren ist bevorzugt, dass die hierin beschriebenen Zusammensetzungen weniger als 100 ppm, besonders bevorzugt weniger als 10 ppm, insbesondere bevorzugt weniger als 1 ppm an organischen Polymeren mit einem gewichtsmittleren Molgewicht von mehr als 500 u enthalten.

Die hierin beschriebenen Zusammensetzungen können mit im Stand der Technik bekannten Verfahren hergestellt werden. In verschiedenen Ausführungsformen schließt ein solches Verfahren das Vorlegen einer wässrigen Lösung der Komponenten a) und b) und das anschließende Zugeben der Komponente c) und optional der Komponente e), in Form eines Feststoffs oder einer wässrigen Lösung, ein. Die entstehende Lösung/Mischung wird gemischt/gerührt, bis eine klare Lösung erhalten wird. Im nächsten Schritt wird Komponente d) zugegeben, ebenfalls in Form einer wässrigen Lösung oder Dispersion, und erneut gemischt/gerührt. Danach ist die Zusammensetzung fertig zur Anwendung auf metallischen Werkstoffen, insbesondere Elektroband.

In den hierin beschriebenen Verfahren zur Beschichtung der Oberfläche eines metallischen Werkstoffs mit den hierin beschriebenen Zusammensetzungen, wird der metallische Werkstoff mit den Zusammensetzungen in Kontakt gebracht. Das in Kontakt bringen der Zusammensetzung mit der Oberfläche des Werkstoffs kann dabei mit allen bekannten Verfahren erfolgen und schließt ein, ist aber nicht beschränkt auf Aufsprühen, Eintauchen, Walzen- oder Rollenauftragung, Aufdrucken, etc..

Die Zusammensetzung wird vorzugsweise als Nassfilm aufgebracht und anschließend getrocknet. Der Nassfilm kann eine Schichtdicke von 0,5 bis 10 µm haben. Insbesondere wird der Nassfilm in einer solchen Menge aufgebracht, dass nach dem Trocknen eine Trockenfilmschichtdicke von zumindest 0,5 µm, vorzugsweise von zumindest 1 µm, jedoch vorzugsweise von nicht mehr als 5 µm realisiert wird. Das Trocknen des Nassfilms kann durch Wärmezufuhr erfolgen, vorzugsweise durch Glühen des Werkstoffs derart, dass eine Peak-Metal-Temperatur von zumindest 500 °C, besonders bevorzugt von zumindest 700 °C, jedoch vorzugsweise von nicht mehr als 1200 °C , besonders bevorzugt von nicht mehr als 1000 °C erreicht wird. Das Glühen erfolgt vorzugsweise für einen Zeitraum von 1 bis 1000, vorzugsweise 10 bis 100 Sekunden.

Der metallische Werkstoff, der mit den hierin beschriebenen Verfahren beschichtet wird kann ein Flacherzeugnis sein, vorzugsweise Bandstahl. In verschiedenen Ausführungsformen hat der Bandstahl die folgende Zusammensetzung:
2,5-4,0 Gew.-% Silizium,
vorzugsweise 0,005-0,1 Gew.-% Kohlenstoff,
sowie jeweils wahlweise:
   bis zu 0,3 Gew.-% Mangan,
   bis zu 0,05 Gew.-% Titan,
   bis zu 0,3 Gew.-% Phosphor,
   bis zu 0,3 Gew.-% Schwefel und/oder Selen,
   bis zu 0,2 Gew.-% Bismut, Antimon, Zinn, Arsen und/oder Tellur
   bis zu 0,5 Gew.-% Kupfer, Nickel, Chrom, Kobalt, Molybdän
   bis zu 0,012 Gew.-% Bor, Vanadium und/oder Niob.

Bei dem Bandstahl handelt es sich vorzugsweise um kornorientiertes Elektroband.

Die mittels derartiger Beschichtungsverfahren korrosionsgeschützten Bandstähle sind ebenfalls Bestandteil der Erfindung. Diese weisen auf ihrer Oberfläche eine anorganische Beschichtung aus Silikaten und einer Anionenmatrix aus Phosphaten auf, die sich durch die oben genannten Vorteile auszeichnet und insbesondere kein Chrom enthält.

In verschiedenen Ausführungsformen kann der Bandstahl eine anorganische Beschichtung aus im Wesentlichen Magnesiumoxid aufweisen. "Im Wesentlichen" bedeutet in diesem Zusammenhang, dass die anorganische Beschichtung zumindest 80 Gew,.-%, vorzugsweise zumindest 90 Gew.-% Magnesiumoxid berechnet als MgO enthält. Die erste Schicht hat vorzugsweise eine Schichtdicke von 0,5 bis 5 µm.

Auf diese erste Beschichtung wird dann die Zusammensetzung der Erfindung aufgetragen. Die Erfindung betrifft somit auch Bandstahl, der auf der metallischen Oberfläche eine anorganische Erstbeschichtung bestehend im Wesentlichen aus Magnesiumoxid und auf dieser Erstbeschichtung eine anorganische Zweitbeschichtung aufweist, wobei die anorganische Zweitbeschichtung im Wesentlichen aus Silikaten und einer Anionenmatrix von Phosphaten besteht und mittels der hierin beschriebenen Verfahren erzeugt wird. Die zweite Schicht enthält vorzugsweise mindestens 30 Gew.-% Phosphat berechnet als PO₄ und mindestens 20 Gew.-% an Silikat berechnet als SiO₄. Die zweite Schicht hat ebenfalls vorzugsweise eine Schichtdicke von 0,5-5 µm.

### Ausführungsbeispiele:

Erfindungsgemäße Beschichtungen von kornorientiertem Stahlband wurden mit den erfindungsgemäßen Zusammensetzungen B2-B4 hergestellt, Zusammensetzung B1 ist nicht erfindungsgemäß.

**Zusammensetzung B1:**

| | |
|---|---|
| 22,8 g | Phosphorsäure (75 Gew.-%ig), |
| 4,4 g | Aluminiumhydroxid, |
| 2,0 g | Mangandihydrogenphosphat, |
| 43,0g | Silika-Dispersion (30 Gew.-%ig) |
| 27,4 g | Wasser |

**Zusammensetzung B2:**

| | |
|---|---|
| 23,0 g | Phosphorsäure (75 Gew.-%ig), |
| 4,4 g | Aluminiumhydroxid, |
| 2,0 g | Mangandihydrogenphosphat, |
| 1,2 g | Zinkoxid |
| 43,0g | Silika-Dispersion (30 Gew.-%ig) |
| 27,6 g | Wasser |

**Zusammensetzung B3:**

| | |
|---|---|
| 21,2 g | Phosphorsäure (75 Gew.-%ig), |
| 2,2 g | Aluminiumhydroxid, |
| 1,1 g | Magnesiumoxid |
| 2,0 g | Mangandihydrogenphosphat, |
| 0,5 g | Zinknitrat |
| 43,0g | Silika-Dispersion (30 Gew.-%ig) |
| 24,0 g | Wasser |

**Zusammensetzung B4:**

| | |
|---|---|
| 20,9 g | Phosphorsäure (75 Gew.-%ig), |
| 2,0 g | Aluminiumhydroxid, |
| 1,5 g | Magnesiumoxid |
| 1,0 g | Mangandihydrogenphosphat, |
| 0,3 g | Zinknitrat |
| 43,0g | Silika-Dispersion (30 Gew.-%ig) |
| 23,0 g | Wasser |

**Vergleichszusammensetzung V1 (chromhaltig):**

| | |
|---|---|
| 22,4 g | Phosphorsäure (75 Gew.-%ig), |
| 4,2 g | Aluminiumhydroxid, |
| 6,9 g | Chromoxid-Lösung (45 Gew.-%ig), |
| 43,0g | Silika-Dispersion (30 Gew.-%ig) |
| 36,0 g | Wasser |

**Vergleichszusammensetzung V2 (chromfrei):**

| | |
|---|---|
| 22,2 g | Phosphorsäure (75 Gew.-%ig), |
| 4,4 g | Aluminiumhydroxid, |
| 43,0g | Silika-Dispersion (30 Gew.-%ig) |
| 23,2 g | Wasser |

**Vergleichszusammensetzung V3 (ohne Aluminium):**

| | |
|---|---|
| 25,9 g | Phosphorsäure (75 Gew.-%ig), |
| 3,5 g | Magnesiumoxid |
| 2,0 g | Mangandihydrogenphosphat, |
| 0,5 g | Zinknitrat |
| 43,0g | Silika-Dispersion (30 Gew.-%ig) |
| 25,2 g | Wasser |

Demgemäß lagen die in Tabelle 1 dokumentierten Konzentrationen der jeweiligen Elemente in den Zusammensetzungen B1-B4 sowie V2 und V3 realisiert vor.

| Tab. 1 | | | | | | |
|---|---|---|---|---|---|---|
| Konzentrationen der Komponenten a)-e) in 10⁻⁴ mol/g in den jeweiligen Zusammensetzungen | | | | | | |
| | Al | Zn | Mn | Mg | PO₄ | SiO₂ |
| B1 | 5,65 | - | 0,80 | - | 19,3 | 21,6 |
| B2 | 5,61 | 1,45 | 0,80 | - | 19,2 | 21,2 |
| B3 | 3,00 | 0,32 | 0,85 | 3,00 | 19,1 | 23,0 |
| B4 | 2,77 | 0,15 | 0,44 | 3,95 | 18,4 | 23,4 |
| V2 | 6,12 | - | - | - | 18,3 | 23,2 |
| V3 | - | 0,28 | 0,80 | 8,59 | 21,6 | 21,5 |

Alle Zusammensetzungen wurden auf die Oberfläche von kornorientiertem Elektrobandblechen mit einem Quetschcoater gleichmäßig aufgebracht und die Bleche bei 850°C für 90 Sekunden geglüht. Die Schichtdicke des Trockenfilms betrug 2-3 µm. Anschließend wurden die Eigenschaften der derart beschichteten Bleche untersucht. Die Ergebnisse sind in Tabelle 2 dargestellt.

**Tab. 2**

| Konzentrationen der Komponenten a)-e) in 10⁻⁴ mol/g in den jeweiligen Zusammensetzungen | | | | | |
|---|---|---|---|---|---|
| | Elemente | Oxidierend¹ | Geruch ² | Aussehen³ | Alkalibeständigkeit⁴ |
| B1 | Al, Mn | - | - | 3 | 3 |
| B2 | Al, Mn, Zn | - | + | 3 | 4 |
| B3 | Al, Mn, Zn, Mg | + | + | 1 | 1 |
| B4 | Al, Mn, Zn, Mg | + | + | 2 | 1 |
| V1 | Al, Cr | - | + | 1 | 1 |
| V2 | Al | - | - | 4 | 5 |
| V3 | Mn, Zn, Mg | + | + | 5 | 3 |

| | | | | | |
|---|---|---|---|---|---|
| 1 oxidierende Anionen enthalten (+/ja ; -/nein) 2 Geruch nach Schwefelwasserstoff feststellbar (+/nein ; -/ja) 3 Die Bleche sollen nach Beschichtung und Trocknung im Ofen farblos sein und metallisch glänzen. Die Bewertung erfolgte entsprechend folgender Skala: (1) klar und glänzend (2) klar, aber matt (3) leicht milchig und matt (4) milchig und matt (5) weiße Beschichtung 4 Die Alkalibeständigkeit der Beschichtung wird durch Abreiben mit Watte, welche mit 20 Gew.-%iger KOH-Lösung getränkt wurde, geprüft. Die Beurteilung erfolgte nach 50 Doppelhüben entsprechend folgender Skala: (1) keine Veränderung der Beschichtung (2) minimale sichtbare Veränderung ohne Änderung des Farbtons (3) sichtbare Veränderung mit leichter Änderung des Farbtons (4) deutlich sichtbare Veränderung mit deutlicher Änderung des Farbtons (5) starke Veränderung der Beschichtung und des Farbtons | | | | | |

Es zeigt sich, dass erfindungsgemäße Zusammensetzungen B2-B4 stets optisch hinreichend gute Beschichtungen liefern. Die Anwesenheit von Zink in den Zusammensetzungen B2-B4 vermag es zudem, die Entstehung von Schwefelwasserstoff beim Beschichtungsprozess soweit zu unterbinden, dass ein Geruch nicht mehr wahrgenommen wird. Ist zudem, wie in den erfindungsgemäßen Zusammensetzungen B3 und B4 das Element Magnesium zugegen, werden optisch einwandfreie Beschichtungen erzielt, die darüber hinaus eine Alkalibeständigkeit aufweisen, die sonst lediglich mit aus dem Stand der Technik bekannten chromhaltigen Zusammensetzungen (V1) bereitgestellt werden kann.

## Patentansprüche

1. Wasserbasierte chromfreie Zusammensetzung enthaltend
a) Phosphorsäure und/oder deren Säureanionen;
b) solvatisierte Aluminium-Kationen,
c) solvatisierte Ionen enthaltend die Elemente Fe, Zn und/oder Mn,
d) mindestens ein Silikat und/oder mindestens ein wasserlösliches Silan oder Siloxan,
wobei solvatisierte Ionen des Elements Zink als Komponente c) enthalten sind und mindestens ein weiteres solvatisiertes Ion der übrigen Elemente gemäß Komponente c),
wobei das molare Verhältnis von Aluminium-Kationen gemäß Komponente b) zur Menge an Phosphorsäure und/oder deren Säureanionen jeweils berechnet als PO₄ gemäß Komponente a) nicht größer als 1,0, vorzugsweise nicht größer als 0,7, und nicht kleiner als 0,1 ist,
wobei das molare Verhältnis der Gesamtmenge der solvatisierten Ionen gemäß Komponente c) berechnet als die Gesamtmenge der Elemente Fe, Zn und Mn zur Menge an Phosphorsäure und/oder deren Säureanionen gemäß Komponente a) berechnet als PO₄ nicht größer als 1,0, vorzugsweise nicht größer als 0,7, und nicht kleiner als 0,1 ist, und
wobei das molare Verhältnis von Silikaten, Silanen oder Siloxanen berechnet als SiO₂ gemäß Komponente d) zur Menge an Phosphorsäure und/oder deren Säureanionen berechnet als PO₄ gemäß Komponente a) nicht größer als 3,0, vorzugsweise nicht größer als 2,0, besonders bevorzugt nicht größer als 1,0, und nicht kleiner als 0,2 ist.

2. Zusammensetzung gemäß Anspruch 1, **dadurch gekennzeichnet, dass** der Anteil an Phosphorsäure und/oder deren Säureanionen an der Zusammensetzung jeweils berechnet als PO₄ zumindest 10 g/kg, vorzugsweise zumindest 20 g/kg beträgt, jedoch vorzugsweise nicht oberhalb von 500, besonders bevorzugt nicht oberhalb von 200 g/kg.

3. Zusammensetzung nach einem oder beiden der vorherigen Ansprüche, **dadurch gekennzeichnet, dass** der Anteil an dispergierten Silikaten in der Zusammensetzung einen D90-Wert von nicht mehr als 500 nm, vorzugsweise von nicht mehr als 300 nm, besonders bevorzugt von nicht größer als 200 nm aufweist.

4. Zusammensetzung nach einem oder mehreren der vorherigen Ansprüche, **dadurch gekennzeichnet, dass** das molare Verhältnis von solvatisierten Aluminium-Kationen gemäß Komponente b) zu solvatisierten Ionen des Elements Zink gemäß Komponente c) nicht kleiner als 3, jedoch nicht größer als 20, vorzugsweise nicht größer als 12 ist.

5. Zusammensetzung nach einem oder mehreren der vorherigen Ansprüche, **dadurch gekennzeichnet, dass** zusätzlich solvatisierte Ionen des Elements Mangan enthalten sind, wobei das molare Verhältnis von solvatisierten Aluminium-Kationen gemäß Komponente b) zu solvatisierten Ionen des Elements Mangan gemäß Komponente c)) nicht kleiner als 1, vorzugsweise nicht kleiner als 2, jedoch nicht größer als 10, vorzugsweise nicht größer als 8 ist.

6. Zusammensetzung nach einem oder mehreren der vorherigen Ansprüche, **dadurch gekennzeichnet, dass** als zusätzliche Komponente e) solvatisierte Kationen der Elemente Mg und/oder Ca enthalten sind, wobei das molare Verhältnis von solvatisierten Aluminium-Kationen gemäß Komponente b) zu solvatisierten Kationen der Elemente Mg und/oder Ca gemäß Komponente e) vorzugsweise nicht kleiner 0,3, besonders bevorzugt nicht kleiner als 0,6, jedoch vorzugsweise nicht größer als 6, besonders bevorzugt nicht größer als 3 ist.

7. Zusammensetzung nach einem oder mehreren der vorherigen Ansprüche, **dadurch gekennzeichnet, dass** insgesamt weniger als 1 g/kg, vorzugsweise weniger als 100 ppm an wasserlöslichen Verbindungen des Elements Bor enthalten sind.

8. Zusammensetzung nach einem oder mehreren der vorherigen Ansprüche, **dadurch gekennzeichnet, dass** insgesamt weniger als 100 ppm, bevorzugt weniger als 10 ppm, insbesondere bevorzugt weniger als 1 ppm an wasserlöslichen Verbindungen der Elemente Zr, Ti und/oder Hf enthalten sind.

9. Zusammensetzung gemäß einem oder mehreren der vorherigen Ansprüche, **dadurch gekennzeichnet, dass** als Quelle für die solvatisierten Kationen der Komponenten b) und c) keine solchen Verbindungen enthalten sind, die Halogenid-Ionen freisetzen, vorzugsweise ist der Anteil an Halogenid-Ionen in der Zusammensetzung kleiner als 100 ppm, besonders bevorzugt kleiner als 10 ppm, insbesondere bevorzugt kleiner als 1 ppm.

10. Verfahren zur Beschichtung der Oberfläche eines metallischen Werkstoffs, **dadurch gekennzeichnet, dass** die Oberfläche des metallischen Werkstoffs mit einer Zusammensetzung gemäß einem oder mehreren Ansprüche 1 bis 9 in Kontakt gebracht wird.

11. Verfahren gemäß Anspruch 10, **dadurch gekennzeichnet, dass** durch das In-Kontakt-bringen ein Nassfilm der Zusammensetzung auf der Oberfläche des metallischen Werkstoffs aufgebracht wird, der nachfolgend getrocknet wird, vorzugsweise durch Wärmezufuhr, vorzugsweise derart, dass eine Peak-Metal-Temperatur von zumindest 500 °C, besonders bevorzugt von zumindest 700 °C, jedoch vorzugsweise von nicht mehr als 1200 °C , besonders bevorzugt von nicht mehr als 1000 °C erreicht wird.

12. Verfahren gemäß einem oder beiden der Ansprüche 10 und 11, **dadurch gekennzeichnet, dass** eine solche Menge eines Nassfilms aufgebracht wird, dass nach dem Trocknen eine Trockenfilmschichtdicke von zumindest 0,5 µm, vorzugsweise von zumindest 1 µm, jedoch vorzugsweise von nicht mehr als 5 µm realisiert wird.

13. Verfahren gemäß einem oder mehreren der Ansprüche 10 bis 12, **dadurch gekennzeichnet, dass** der metallische Werkstoff ein Flacherzeugnis ist, vorzugsweise ausgewählt aus Bandstahl.

14. Verfahren gemäß Anspruch 13, **dadurch gekennzeichnet, dass** der Bandstahl eine anorganische Beschichtung aus im Wesentlichen Magnesiumoxid aufweist.

15. Bandstahl, der auf der metallischen Oberfläche eine anorganische Erstbeschichtung bestehend im Wesentlichen aus Magnesiumoxid und auf dieser Erstbeschichtung eine anorganische Zweitbeschichtung aufweist, wobei die anorganische Zweitbeschichtung im Wesentlichen aus Silikaten und einer Anionenmatrix von Phosphaten besteht, erhältlich in einem Verfahren gemäß Anspruch 13.

## Claims

1. A water-based chrome-free composition, containing:
a) phosphoric acid and/or acid anions thereof;
b) solvated aluminum cations;
c) solvated ions containing the elements Fe, Zn and/or Mn,
d) at least one silicate and/or at least one water-soluble silane or siloxane,
wherein solvated ions of the element zinc are contained as component c) and at least one further solvated ion of the remaining elements according to component c),
wherein the molar ratio of aluminum cations according to component b) to the amount of phosphoric acid and/or acid anions thereof, in each case calculated as PO₄, according to component a), is no greater than 1.0, preferably no greater than 0.7, and no less than 0.1, wherein the molar ratio of the total amount of solvated ions according to component c), calculated as the total amount of the elements Fe, Zn and Mn, to the amount of phosphoric acid and/or acid anions thereof according to component a), calculated as PO₄, is no greater than 1.0, preferably no greater than 0.7 and no less than 0.1, and
wherein the molar ratio of silicates, silanes or siloxanes, calculated as SiO₂, according to component d) to the amount of phosphoric acid and/or acid anions thereof, calculated as PO₄, according to component a), is no greater than 3.0, preferably no greater than 2.0, particularly preferably no greater than 1.0 and no less than 0.2.

2. The composition according to claim 1, **characterized in that** the proportion of phosphoric acid and/or acid anions thereof in the composition, in each case calculated as PO₄, is at least 10 g/kg, preferably at least 20 g/kg, but preferably not more than 500 and particularly preferably not more than 200 g/kg.

3. The composition according to one or both of the preceding claims, **characterized in that**, the proportion of dispersed silicates in the composition has a D90 value of no more than 500 nm, preferably no more than 300 nm, particularly preferably no more than 200 nm.

4. The composition according to one or more of the preceding claims, **characterized in that** the molar ratio of solvated aluminum cations according to component b) to solvated ions of the element zinc according to component c) is no less than 3, but no greater than 20, preferably no greater than 12.

5. The composition according to one or more of the preceding claims, **characterized in that** solvated ions of the element manganese are additionally contained, the molar ratio of solvated aluminum cations according to component b) to solvated ions of the element manganese according to component c) being no less than 1, preferably no less than 2, but no greater than 10, preferably no greater than 8.

6. The composition according to one or more of the preceding claims, **characterized in that** solvated cations of the elements Mg and/or Ca are contained as an additional component e), the molar ratio of solvated aluminum cations according to component b) to solvated cations of the elements Mg and/or Ca according to component e) being preferably no less than 0.3, particularly preferably no less than 0.6, but preferably no greater than 6, particularly preferably no greater than 3.

7. The composition according to one or more of the preceding claims, **characterized in that** in total less than 1 g/kg, preferably less than 100 ppm of water-soluble compounds of the element boron are contained.

8. The composition according to one or more of the preceding claims, **characterized in that** in total less than 100 ppm, preferably less than 10 ppm, particularly preferably less than 1 ppm of water-soluble compounds of the elements Zr, Ti and/or Hf are contained.

9. The composition according to one or more of the preceding claims, **characterized in that** no compounds that release halide ions are contained as the source for the solvated cations of components b) and c), and the proportion of halide ions in the composition is preferably less than 100 ppm, more preferably less than 10 ppm, particularly preferably less than 1ppm.

10. A method for coating the surface of a metal material, **characterized in that** the surface of the metal material is brought into contact with a composition according to one or more of the preceding claims 1 to 9.

11. The method according to claim 10, **characterized in that**, by means of the contacting, a wet film of the composition is applied to the surface of the metal material, which is subsequently dried, preferably by the introduction of heat, preferably in such a way that a peak metal temperature of at least 500 °C, particularly preferably at least 700 °C, but preferably no more than 1200 °C, particularly preferably no more than 1000 °C, is reached.

12. The method according to one or both of claims 10 and 11, **characterized in that** such an amount of wet film is applied that, after drying, a dry film layer thickness of at least 0.5 µm, preferably of at least 1 µm, but preferably no more than 5 µm is achieved.

13. The method according to one or more of claims 10 to 12, **characterized in that** the metal material is a flat product, preferably selected from strip steel.

14. The method according to claim 13, **characterized in that** the steel strip has an inorganic coating composed substantially of magnesium oxide.

15. A steel strip that has, on the metal surface, an inorganic first coating consisting substantially of magnesium oxide and, on said first coating, an inorganic second coating, wherein the inorganic second coating consists substantially of silicates and an anion matrix of phosphates, which strip can be obtained in a method according to claim 13.

## Revendications

1. Composition sans chrome à base d'eau contenant
a) de l'acide phosphorique et/ou ses anions acides ;
b) des cations d'aluminium solvatés,
c) des ions solvatés contenant les éléments Fe, Zn et/ou Mn,
d) au moins un silicate et/ou au moins un silane ou siloxane hydrosoluble,
dans laquelle des ions solvatés de l'élément zinc sont présents en tant que composant c) et au moins un autre ion solvaté du reste des éléments conformément au composant c), dans laquelle le rapport molaire de cations d'aluminium conformément au composant b) sur la quantité en acide phosphorique et/ou ses anions acides respectivement calculée en tant que PO₄ conformément au composant a) n'est pas supérieur à 1,0, de préférence n'est pas supérieur à 0,7 et n'est pas inférieur à 0,1,
dans laquelle le rapport molaire de la quantité totale des ions solvatés conformément au composant c) calculé comme la quantité totale des éléments Fe, Zn et Mn sur la quantité en acide phosphorique et/ou ses anions acides conformément au composant a) calculé en tant que PO₄ n'est pas supérieur à 1,0, de préférence n'est pas supérieur à 0,7 et n'est pas inférieur à 0,1, et
dans laquelle le rapport molaire de silicates, silanes ou siloxanes calculé en tant que SiO₂ conformément au composant d) sur la quantité en acide phosphorique et/ou ses anions acides calculé en tant que PO₄ conformément au composant a) n'est pas supérieur à 3,0, de préférence n'est pas supérieur à 2,0, de manière particulièrement préférée n'est pas supérieur à 1,0 et n'est pas inférieur à 0,2.

2. Composition selon la revendication 1, **caractérisée en ce que** la part en acide phosphorique et/ou ses anions acides dans la composition, respectivement calculée en tant que PO₄, vaut au moins 10 g/kg, de préférence au moins 20 g/kg, mais vaut de préférence au maximum 500, de manière particulièrement préférée au maximum 200 g/kg, toutefois.

3. Composition selon l'une ou les deux revendications précédentes, **caractérisée en ce que** la part en silicates dispersés dans la composition présente une valeur D90 d'au maximum 500 nm, de préférence d'au maximum 300 nm, de manière particulièrement préférée d'au maximum 200 nm.

4. Composition selon l'une ou plusieurs des revendications précédentes, **caractérisée en ce que** le rapport molaire des cations d'aluminium solvatés conformément au composant b) sur les ions solvatés de l'élément zinc conformément au composant c) n'est pas inférieur à 3, sans être supérieur à 20, de préférence sans être supérieur à 12, toutefois.

5. Composition selon l'une ou plusieurs des revendications précédentes, **caractérisée en ce qu'**elle contient en plus des ions solvatés de l'élément manganèse, dans laquelle le rapport molaire des cations d'aluminium solvatés conformément au composant b) sur les ions solvatés de l'élément manganèse conformément au composant c) n'est pas inférieur à 1, de préférence n'est pas inférieur à 2, sans être supérieur à 10, de préférence sans être supérieur à 8, toutefois.

6. Composition selon l'une ou plusieurs des revendications précédentes, **caractérisée en ce qu'**elle contient, en tant que composant e) supplémentaire, des cations solvatés des éléments Mg et/ou Ca, dans laquelle le rapport molaire des cations d'aluminium solvatés conformément au composant b) sur les cations solvatés des éléments Md et/ou Ca conformément au composant e) n'est de préférence pas inférieur à 0,3, de manière particulièrement préférée n'est pas inférieur à 0,6, sans être supérieur de préférence à 6, de manière particulièrement préférée sans être supérieur à 3, toutefois.

7. Composition selon l'une ou plusieurs des revendications précédentes, **caractérisée en ce qu'**elle contient au total moins de 1 g/kg, de préférence moins de 100 ppm en composés hydrosolubles de l'élément bore.

8. Composition selon l'une ou plusieurs des revendications précédentes, **caractérisée en ce qu'**elle contient au total moins de 100 ppm, de manière préférée moins de 10 ppm, de manière particulièrement préférée moins de 1 ppm en composés hydrosolubles des éléments Zr, Ti et/ou Hf.

9. Composition selon l'une ou plusieurs des revendications précédentes, **caractérisée en ce qu'**elle ne contient, en tant que source de cations solvatés des composants b) et c), aucun composé libérant des ions halogénures, de préférence la part en ions halogénures dans la composition est inférieure à 100 ppm, de manière particulièrement préférée inférieure à 10 ppm, de manière particulièrement préférée inférieure à 1 ppm.

10. Procédé de revêtement des surfaces d'un matériau métallique, **caractérisé en ce que** la surface du matériau métallique est mis en contact avec une composition selon l'une ou plusieurs des revendications 1 à 9.

11. Procédé selon la revendication 10, **caractérisé en ce que**, par la mise en contact, un film humide de la composition est appliqué sur la surface du matériau métallique, qui est ensuite séché, de préférence par apport de chaleur, de préférence de telle sorte à atteindre une température du métal maximale d'au moins 500 °C, de manière particulièrement préférée d'au moins 700 °C, mais de préférence d'au maximum 1 200 °C, de manière particulièrement préférée d'au maximum 1 000 °C.

12. Procédé selon l'une ou plusieurs des revendications 10 à 11, **caractérisée en ce qu'**une telle quantité d'un film humide est appliquée de telle sorte qu'après le séchage, il se forme une épaisseur de couche de film sec d'au moins 0,5 µm, de préférence d'au moins 1 µm, mais de préférence d'au maximum 5 µm, toutefois.

13. Procédé selon l'une ou plusieurs des revendications 10 à 12, **caractérisé en ce que** le matériau métallique est un produit plat, de préférence sélectionné parmi les bandes en acier.

14. Procédé selon la revendication 13, **caractérisé en ce que** la bande en acier présente un revêtement constitué pour l'essentiel d'oxyde de magnésium.

15. Bande en acier, présentant sur la surface métallique un premier revêtement inorganique constitué pour l'essentiel d'oxyde de magnésium et présentant sur ce premier revêtement un second revêtement inorganique, le second revêtement inorganique étant constitué pour l'essentiel de silicates et d'une matrice d'anions de phosphates, pouvant être produite dans un procédé selon la revendication 13.
